# EUROPÄISCHE PATENTSCHRIFT

(11) **EP 3 833 628 B1**
(45) Veröffentlichungstag und Bekanntmachung des Hinweises auf die Patenterteilung: **06.09.2023**
(21) Anmeldenummer: 19726656.2
(22) Anmeldetag: 23.05.2019
(51) Int. Cl.: B67C 3/06, B29C 49/08, B29C 49/64, B29C 49/42, B67C 3/02

(54) **VERFAHREN UND VORRICHTUNG ZUM BEFÜLLEN VON BEHÄLTERN MIT EINEM CO2-HALTIGEN FLÜSSIGKEITSPRODUKT**
METHOD AND DEVICE FOR FILLING A CO2 CONTAINING LIQUID PRODUCT INTO CONTAINERS
PROCÉDÉ ET DISPOSITIF POUR REMPLIR UN PRODUIT LIQUIDE CONTENANT DE CO2 DANS DES RÉCIPIENTS

(30) Priorität: 10.08.2018 DE 102018119550
(43) Veröffentlichungstag der Anmeldung: 16.06.2021
(73) Patentinhaber: KHS GmbH, 44143 Dortmund (DE)
(72) Erfinder: MUSZINSKI, Olaf, 65779 Kelkheim (DE); STOLTE, Thomas, 55545 Bad Kreuznach (DE)
(86) Internationale Anmeldenummer: PCT/EP2019/063315
(87) Internationale Veröffentlichungsnummer: WO 2020/030314

(56) Entgegenhaltungen:
- WO-A1-2017/093078
- DE-A1-102012 104 267
- US-A- 2 372 899
- US-A- 5 996 322

## Beschreibung

Die vorliegende Erfindung betrifft ein Verfahren zum Befüllen von Behältern unter Druck mit einem karbonisierten Flüssigkeitsprodukt, nämlich einem CO₂-haltigen Flüssigkeitsprodukt, welches einen vorgegebenen Produkt-CO₂-Gehalt aufweist. Die vorliegende Erfindung betrifft dabei insbesondere auch das Befüllen von heißen Behältern, insbesondere von durch Streckblasen hergestellten Kunststoffbehältern, beispielsweise Kunststoffbehältern mit der äußeren Gestalt üblicher Getränkedosen, PET-Flaschen, oder Kegs mit dem karbonisierten, CO₂-haltigen Flüssigkeitsprodukt, bei dem es sich insbesondere um ein CO₂-haltiges Getränk handelt, beispielsweise um verschiedene Arten so genannter Softdrinks, das aber auch Bier oder Sekt sein kann.

Karbonisierte, nämlich CO₂-haltige Flüssigkeitsprodukte mit vorgegebenem Produkt-CO₂-Gehalt werden für gewöhnlich über ein Abfüllverfahren abgefüllt, bei dem ein bestimmter Fülldruck während des Füllprozesses eingestellt wird, welcher je nach Art bzw. CO₂-Gehalt und Temperatur des abzufüllenden Flüssigkeitsproduktes, insbesondere Getränks, z.B. zwischen 4 - 7 bar betragen kann. Bei einem solchen Druckfüllen werden die Behälter vor bzw. zu Beginn des Füllvorganges mit einem Inert- oder Vorspanngas oder Gasgemisch, beispielsweise mit CO₂ auf einen Druck oberhalb des Sättigungsdruckes der abzufüllenden Flüssigkeit bzw. auf den Fülldruck vorgespannt, welcher während des anschließenden Befüllens der Behälter aufrechterhalten wird, um ein Ausgasen des in der Flüssigkeit enthaltenen CO₂ bzw. ein Aufschäumen der Flüssigkeit zu verhindern. Nachfolgend sollen unter karbonisierten Flüssigkeitsprodukten auch sonstige Produkte verstanden werden, die in analoger Weise unter Druck mit einem Gas oder Gasgemisch versetzt werden, wie beispielsweise Stout Biere, denen Stickstoff (N₂) in analoger Weise zugesetzt wird.

Das Vorspannen des Behälterinnenraumes mit Inertgas kann sich als problematisch erweisen, insbesondere wenn die Behälter beispielsweise von einer vorgeschalteten Behälterbehandlung kommend noch warm oder heiß sind und im warmen oder heißen Zustand in die Füllmaschine einlaufen. Beispielsweise können PET-Flaschen mittels Streckblasen in einem Streckblasvorgang hergestellt und anschließend an die Füllmaschine übergeben werden. Insbesondere, wenn aus räumlichen Gründen oder aufgrund von Zeit-, Energie- und Kosteneinsparungen eine zwischen der Streckblasmaschine und der Füllmaschine angeordnete Abkühlstrecke entfallen soll bzw. entfällt, ist die Gefahr einer möglichen, unerwünschten Verformung der streckgeblasenen PET-Flaschen gegeben, da das Kunststoffmaterial aufgrund der hohen Temperatur noch sehr weich ist.

Hier ist anzuführen, dass eine Verformung des Behälters, insbesondere seines Bodenbereichs sehr nachteilig ist. Insbesondere für den automatisierten Transport und die weitere Handhabung des Behälters in Füllanlagen, Gruppierungsanlagen, Etikettieranlagen und Verpackungseinlagen ist eine vom Soll abweichende geometrische Gestalt des Behälters sehr hinderlich. Besonders störend ist es, wenn der Bodenbereich des Behälters unerwünscht verformt ist.

Um insbesondere den Nachteilen notwendiger Kühlstrecken zu begegnen, welche zum einen Platz innerhalb einer Herstellungs- und Füllanlage benötigen und zum anderen kosten- und energieaufwendig sind, ist ein Verfahren mit einer zugehörigen Vorrichtung beschrieben worden (WO 2017/093078 A1), bei dem ein Druckbefüllen mit CO₂-haltigen Getränken direkt nach dem Streckblasen ermöglicht wird, indem zu Beginn der Befüllung ein geringer, erster Druck, vorzugsweise Umgebungsdruck in den Behältern eingestellt wird und erst mit steigendem Füllvolumen und damit einhergehender Behälter-Abkühlung der Druck auf den Solldruck erhöht wird. Das Abfüllen mehrkomponentiger Getränke ist z.B. aus US 2 372 899 A bekannt.

Schwierig ist es dabei jedoch, den gemäß Produktspezifikationen vorgegebenen Kohlensäuregehalt bzw. CO₂-Gehalt des fertig abgefüllten Getränks genau einzustellen, so dass das abgefüllte Getränk die Produktspezifikationen ordnungsgemäß und exakt erfüllt und diesbezügliche, inakzeptable Schwankungen zwischen einzelnen Behältern vermieden werden können.

Es ist daher Aufgabe der Erfindung, ein Verfahren anzugeben, das eine einfache Befüllung von Behältern mit CO₂-haltigen Getränken unter einem geringen Platz-und Kostenaufwand unabhängig von der Behältertemperatur ermöglicht, wobei bei dem Verfahren im Zuge der Befüllung insbesondere der Kohlensäuregehalt für das fertig abgefüllte Flüssigkeitsprodukt gemäß vorgegebenen Produktspezifikationen mit geringstmöglichen Schwankungen genau eingestellt werden kann.

Die Aufgabe wird erfindungsgemäß durch ein Verfahren gemäß Patentanspruch 1 gelöst. Des Weiteren wird die Aufgabe durch eine Vorrichtung gemäß Anspruch 15 gelöst. Vorteilhafte Weiterbildungen der Erfindung sind Gegenstand der abhängigen Ansprüche. Vorteilhafte Weiterbildungen der Erfindung sind ebenfalls in der Beschreibung und in der Zeichnung beschrieben.

Die vorliegende Erfindung stellt ein Verfahren zum Befüllen von Behältern mit einem CO₂-haltigen Flüssigkeitsprodukt mit einem vorgegebenen Produkt-CO₂-Gehalt zur Verfügung, bei dem die Behälter an eine Füllmaschine mit Füllelementen übergeben und mittels der vorgesehenen Füllelemente befüllt werden. Jeder Behälter wird während des Beginns der Befüllung in einer ersten Füllphase unter einen ersten Druck gesetzt bzw. weist den Umgebungsdruck als ersten Druck auf und der Druck im Behälter wird nachfolgend in einer zweiten Füllphase auf wenigstens einen zweiten Druck erhöht. Dabei wird ganz allgemein in der ersten Füllphase ein Volumen einer ersten Produktkomponente mit einem ersten CO₂-Gehalt dem Füllelement zugeführt und über das Füllelement in den Behälter gefüllt. In der zweiten Füllphase wird ein Volumen einer zweiten Produktkomponente mit einem gleichen oder einem zweiten CO₂-Gehalt dem Füllelement zugeführt und über das Füllelement in den Behälter gefüllt. Dabei ist zumindest einer beiden CO₂-Gehalte der beiden Produktkomponenten höher als der vorgegebene Produkt-CO₂-Gehalt des Flüssigkeitsproduktes, so dass final die erste Füllphase und die zweite Füllphase derart aufeinander abgestimmt werden, dass das Flüssigkeitsprodukt in dem vollständig befüllten Behälter den vorgegebenen Soll-Wert des Produkt-CO₂-Gehaltes aufweist.

Gemäß einer bevorzugten Ausführungsvariante zeichnet sich das Verfahren insbesondere dadurch aus, dass in der ersten Füllphase ein Volumen einer ersten Produktkomponente mit einem ersten CO₂-Gehalt dem Füllelement zugeführt und über das Füllelement in den Behälter gefüllt wird und dass in der zweiten Füllphase ein Volumen einer zweiten Produktkomponente mit einem zweiten CO₂-Gehalt dem Füllelement zugeführt und über das Füllelement in den Behälter gefüllt wird. Dabei ist zumindest der zweite CO₂-Gehalt der zweiten Produktkomponente höher als der vorgegebene Produkt-CO₂-Gehalt des Flüssigkeitsproduktes. Die erste Füllphase und die zweite Füllphase werden derart aufeinander abgestimmt, dass das Flüssigkeitsprodukt in dem vollständig befüllten Behälter den vorgegebenen Produkt-CO₂-Gehalt aufweist.

Vorliegend werden unter einem CO₂-haltigen Flüssigkeitsprodukt insbesondere CO₂-haltige Getränke verstanden, beispielsweise alkoholfreie Getränke wie Fruchtsaft-Mischgetränke, Limonaden und Softdrinks oder alkoholische Getränke wie z.B. bierhaltige oder Bier-Mischgetränke, Bier, Sekt oder dergleichen. Unter Behältern im Sinne der vorliegenden Erfindung sind daher insbesondere Flaschen bzw. Getränkeflaschen oder Getränkedosen zu verstehen. Im Sinne der vorliegenden Erfindung ist der Begriff "CO₂-haltig" als Synonym zu den Begriffen "kohlensäurehaltig" oder "karbonisiert" zu verstehen. In Analogie dazu wird der CO₂-Gehalt vorliegend als Kohlensäuregehalt oder Karbonisierungsgrad verstanden.

Erfindungsgemäß werden ein Volumen einer ersten Produktkomponente und ein Volumen einer zweiten Produktkomponente in aufeinanderfolgenden ersten und zweiten Füllphasen in den Behälter abgefüllt, wobei der im Vergleich zum vorgegebenen Produkt-CO₂-Gehalt des Flüssigkeitsproduktes höhere CO₂-Gehalt der ersten oder zweiten Produktkomponente so gewählt bzw. eingestellt wird, dass in dem vollständig befüllten Behälter in dem fertig gemischten Flüssigkeitsprodukt der vorgegebene Produkt-CO₂-Gehalt herrscht. Insbesondere wird bei einem höheren zweiten CO₂-Gehalt der zweiten Produktkomponente ein vollständiges Ausgasen der ersten Produktkomponente während der ersten Füllphase angenommen bzw. in Kauf genommen, so dass beispielsweise ein CO₂-Gehalt des bereits abgefüllten Volumens der ersten Produktkomponente unberücksichtigt bleiben kann und der zweite CO₂-Gehalt der zweiten Produktkomponente aufgrund der Mischung mit der ersten Produktkomponente verringert oder "verdünnt" wird, und zwar auf den vorgegebenen Produkt-CO₂-Gehalt.

Dabei werden insbesondere beide Füllphasen, nämlich sowohl die erste Füllphase, die bei dem im Behälter vorherrschenden ersten Druck erfolgt, als auch die zweite Füllphase, die mit dem im Behälter eingestellten erhöhten zweiten Druck erfolgt, in derselben Füllmaschine durchgeführt. Jeder zu befüllende Behälter wird dabei bei der Übergabe an die Füllmaschine einem entsprechenden Füllelement der Füllmaschine zugeordnet, an dem dann beide Füllphasen durchgeführt werden, das heißt, über ein- und dasselbe zugeordnete Füllelement derselben Füllmaschine erfolgt das Befüllen in beiden Füllphasen.

Ganz besonders vorteilhaft werden dadurch sowohl Produktionszeit wie auch Kosten und Platz gespart, da sämtliche Füllphasen bis zur vollständigen Befüllung eines Behälters über das eine, jeweilig zugeordnete Füllelement der vorgesehenen Füllmaschine bewerkstelligt werden können. Transportvorgänge und weitere, zusätzliche Behälterübergaben zwischen möglicherweise verschiedenartigen Vorfüll- und/oder Dosiereinrichtungen und der "eigentlichen" Füllmaschine können damit vorteilhaft entfallen, wodurch Transportstrecken auf ein Minimum reduziert werden. Ebenso kann der Steuerungsaufwand vorteilhaft gering gehalten werden, da vermieden werden kann, dass eine für die Steuerung vorgesehene Steuereinrichtung mit zusätzlichen, von der "eigentlichen" Füllmaschine verschiedenen Fülleinrichtungen, insbesondere Vorfüll- und/oder Dosiereinrichtungen, kommunizieren muss.

Erfindungsgemäß wird der Behälter unmittelbar aus einer vorgeschalteten Behälterbehandlungseinheit bzw. Behälterbehandlungsstation kommend an eine mit einem Füllelement ausgestattete Füllposition der Füllmaschine übergeben und sofort in der ersten Füllphase mit der ersten Flüssigkeitskomponente befüllt werden. Dabei muss nicht berücksichtigt werden, welche Temperatur der Behälter, nämlich insbesondere die Behälterwandung oder der Behälterboden aufweist. Aufgrund der zunächst erfolgenden ersten Füllphase bei einem im Behälter vorherrschenden geringeren ersten Druck, wird die auf den Behälter wirkende mechanische Belastung so gering gehalten, dass auch die noch warme bzw. noch heiße Behälterwandung, insbesondere der Behälterboden den Beanspruchungen standhält. Die durch die die erste Flüssigkeitskomponente bewirkte Kühlung, führt quasi während der ersten Füllphase zu einer ausreichenden Festigung der Behälterwandung bzw. zu einer "Stabilisierung" des Behälters oder der "Behälterform", so dass der Behälter nachfolgend auch dem in der zweiten Füllphase einzustellenden bzw. eingestellten zweiten Druck standhält.

Im Sinne der vorliegenden Erfindung ist dabei unter der "unmittelbaren" Übergabe des Behälters von der vorgeschalteten Behälterbehandlungsstation an die Füllmaschine, beispielsweise von einer Streckblasmaschine an die Füllmaschine, zu verstehen, dass keine weitere Behandlungseinheit zwischen der Streckblasmaschine und der Füllmaschine angeordnet ist. Lediglich Entnahme-oder Übergabeeinrichtungen, wie zum Beispiel ein Entnahmestern für die Entnahme der Behälter aus der Streckblasmaschine sind dabei zwischen der Streckblasmaschine und der Füllmaschine angeordnet. Je nach örtlicher Gegebenheit und Ausführung einer Produktionsanlage kann auch eine kurze Transportstrecke vorgesehen sein, auf welcher der Behälterboden bei normaler Linienleistung jedoch nur geringfügig abkühlt, und zwar in einem Maße, welches unbedeutend für die Behälterfestigkeit oder -stabilität ist.

Vorteilhaft muss bei dem vorliegenden Verfahren ebenfalls nicht berücksichtigt werden, welche Temperatur bedingt durch die noch heiße Behälterwandung folglich in dem Behälterinnenraum herrscht, da der CO₂-Verlust bzw. das Entweichen von CO₂ aus der ersten Flüssigkeitskomponente, nämlich das Ausgasen der ersten Flüssigkeitskomponente vernachlässigt werden kann. Durch die Abstimmung der ersten und zweiten Füllphase, und zwar insbesondere durch die Abstimmung des Verhältnisses der jeweiligen Volumina der ersten und zweiten Flüssigkeitskomponente und gleichzeitiger, entsprechender Einstellung des ersten oder zweiten CO₂-Gehalts der ersten oder zweiten Produktkomponente auf einen Wert, der höher ist als derjenige des vorgegebenen Produkt-CO₂-Gehalts des Flüssigkeitsproduktes, kann im Endprodukt der vorgegebene Produkt-CO₂-Gehalt erzielt werden. Beispielsweise kann bei entsprechender Einstellung des zweiten CO₂-Gehalts der zweiten Produktkomponente auf einen höheren Wert auch das vollständige Entweichen von vorhandenem CO₂ aus der ersten Flüssigkeitskomponente ausgeglichen werden.

Vorteilhaft müssen daher keine Maßnahmen getroffen werden, um einem Ausgasen der ersten Flüssigkeitskomponente während der ersten Füllphase entgegenzuwirken. Die erste Füllphase, nämlich das Abfüllen der ersten Flüssigkeitskomponente kann daher beispielsweise auch über ein Freistrahlfüllen erfolgen, wobei das Abfüllen insbesondere mit hoher Füllgeschwindigkeit erfolgen kann. Ebenso können besonders vorteilhaft Maßnahmen zur Verhinderung von Schaumbildung bzw. Aufschäumen während der ersten Füllphase eingespart werden.

Da das CO₂ in der ersten Füllphase ungehindert entweichen kann ohne die Spezifikationswerte bezüglich des CO₂-Gehalts des fertigen, abgefüllten Getränks, nämlich den vorgegebenen Produkt-CO₂-Gehalt des Flüssigkeitsproduktes zu beeinträchtigen, kann die erste Füllphase beispielsweise auch durchgeführt werden bevor bzw. ohne dass die Behälter in Dichtlage mit einem jeweiligen Füllelement gebracht werden. In einer solchen Dichtlage ist eine Abgabeöffnung des Füllelementes mit der Behälteröffnung beispielsweise über eine Manschette oder eine Zentrierglocke gasdicht verbunden. Eine derartige gasdichte Verbindung kann vorzugsweise während der ersten Füllphase unterbleiben, so dass die erste Füllphase bevorzugt auch als kontaktloses Füllen durchgeführt werden kann.

Selbstverständlich kann jedoch alternativ auch in der ersten Füllphase bereits ein Kontaktfüllen, bei allerdings geringerem ersten Druck, durchgeführt werden. Die Regulation oder Steuerung der Druckbeaufschlagung kann dabei gegebenenfalls so gesteuert werden, dass mit dem Einfüllen der ersten Produktkomponente und der damit einhergehenden Abkühlung der Behälterwandung, gleichzeitig bereits ein langsamer Druckanstieg bewirkt wird, so dass am Ende der ersten Füllphase bereits ein höherer Druck im Behälter eingestellt ist als zu Beginn der ersten Füllphase. Je nach Füllprozess und dabei vorgesehenen Prozessbedingungen ist es auch denkbar, dass beispielsweise mit dem Ende der ersten Füllphase bereits der für die zweite Füllphase vorgesehene zweite Druck erreicht wird. Dies resultiert wiederum in einer zeitoptimierten Abfüllung.

Das vorliegende Verfahren ist somit insbesondere ein Verfahren zum Befüllen von Behältern mit karbonisierter Flüssigkeit unter Druck. Dabei können die zu befüllenden Behälter unmittelbar nach dem Streckblasen - ohne Zwischenschritte - in ein und derselben Füllmaschine direkt befüllt werden, und zwar unter Druck.

Gemäß einer bevorzugten Ausführungsvariante wird die erste Produktkomponente mit einer ersten relativen Dichte, gemessen in Grad Brix abgefüllt und die zweite Produktkomponente wird mit einer zweiten relativen Dichte, gemessen in Grad Brix, abgefüllt. Diese Dichte steht hier stellvertretend für die Konzentration bzw. den Verdünnungsfaktor des Getränkes, wobei andere Parameter als der Zuckergehalt in analoger Weise ebenso gemeint sein können.

Dabei ist die erste relative Dichte der ersten Produktkomponente geringer als ein vorgegebener Produktwert der relativen Dichte des Flüssigkeitsproduktes und die zweite relative Dichte der zweiten Produktkomponente ist höher als der vorgegebene Produktwert der relativen Dichte des Flüssigkeitsproduktes. Die erste und zweite relative Dichte werden in Abhängigkeit des jeweiligen in der ersten und zweiten Füllphase abgefüllten Volumens der ersten und zweiten Produktkomponente eingestellt, und zwar derart, dass das Flüssigkeitsprodukt in dem vollständig befüllten Behälter den vorgegebenen Produktwert der relativen Dichte aufweist.

Die relative Dichte gemessen in Grad Brix, welche vorliegend auch als spezifische Dichte in Grad Brix oder als Brix-Gehalt bzw. als Brix-Wert zu verstehen ist, wird vornehmlich bei zuckerhaltigen Getränken, insbesondere bei Fruchtsäften, Limonaden oder dergleichen verwendet, um den ungefähren Zuckergehalt der Getränke anzugeben, wobei hohe Brix-Werte auf einen süßeren Geschmack deuten. Eine Flüssigkeit hat beispielsweise ein Grad Brix (=1 % Brix), wenn sie dieselbe Dichte hat wie eine Lösung von 1 g Saccharose in 100 g Saccharose/Wasser-Lösung.

Besonders vorteilhaft können mit dem vorliegenden bevorzugten Verfahren die beiden Füllphasen derart aufeinander abgestimmt werden, dass das fertige, abgefüllte Flüssigkeitsprodukt gleichzeitig sowohl den gewünschten, vorgegebenen CO₂-Gehalt als auch den gewünschten, vorgegebenen Brix-Wert aufweist und die entsprechenden Produktspezifikationen erfüllt.

Besonders bevorzugt wird als erste Produktkomponente eine Produktkomponente verwendet, die einen ersten CO₂-Gehalt aufweist, der geringer ist als der vorgegebene Produkt-CO₂-Gehalt des Flüssigkeitsproduktes, wobei insbesondere bevorzugt eine nicht-karbonisierte Produktkomponente, vorzugsweise ein Produktwasser als erste Produktkomponente verwendet wird. Besondere Vorteile bringen diese bevorzugten Ausführungsvarianten mit sich, da beispielsweise Produktwasser, welches vorliegend als reines, sauberes Wasser, insbesondere als lebensmittelreines Wasser bzw. Trinkwasser verstanden wird, auf einfachste Weise mittels einer Produktwasserversorgung für die erste Füllphase den Füllelementen zugeführt und entsprechend in die Behälter abgefüllt werden kann. Das Volumen Produktwasser kann quasi als einfaches "Verdünnungsmittel" angesehen werden, wobei CO₂-Gehalt und Brix-Wert gemäß den entsprechenden Produktspezifikationen über den CO₂-Gehalt und die relative Dichte der zweiten Produktkomponente eingestellt wird, welche mit entsprechend erhöhtem CO₂-Gehalt und Brix-Wert ausgemischt und dem Füllelement zugeführt wird.

Dabei ist es ausreichend, das in der ersten Füllphase abgefüllte Volumen des als erste Produktkomponente verwendeten Produktwassers zu kontrollieren und einzustellen. Abgestimmt darauf können dann das Volumen, der zweite CO₂-Gehalt und die zweite relative Dichte der zweiten Produktkomponente derart eingestellt werden, dass das Flüssigkeitsprodukt in dem vollständig befüllten Behälter den vorgegebenen Produkt-CO₂-Gehalt und den gewünschten Brix-Wert aufweist.

Gemäß einer bevorzugten Ausführungsvariante entspricht der erste Druck während der ersten Füllphase dem Umgebungsdruck. In diesen Ausführungsvarianten kann die erste Füllphase insbesondere ohne Dichtlage des Behälters am Füllelement, nämlich kontaktlos ausgeführt werden.

Für die zweite Füllphase wird der Druck im Behälter auf den zweiten Druck erhöht. Diese zweite Füllphase kann im Wesentlichen als so genanntes Druckfüllen verstanden werden, welches im Sinne der Erfindung ein Füllverfahren ist, bei dem der jeweils zu füllende Behälter in Dichtlage gegen das Füllelement anliegt und vor oder während der eigentlichen Füllphase, d. h. vor bzw. beim Öffnen eines Flüssigkeitsventils des Füllelementes, über wenigstens einen gesteuerten, im Füllelement ausgebildeten Gasweg mit einem unter Druck stehenden Spanngas (Inertgas bzw. CO₂-Gas) vorgespannt wird. Das Spanngas wird dann während des Füllens von der dem Behälter zufließenden zweiten Produktkomponente bzw. Füllgut zunehmend als Rückgas aus dem Behälterinnenraum verdrängt, und kann über wenigstens einen, ebenfalls im Füllelement ausgebildeten, gesteuerten RückGasweg kontrolliert aus dem Behälter entweichen. Der Solldruck bei einem derartigen Druckfüllen liegt bei CO₂-haltigen Softdrinks in der Regel zwischen 4,5 und 7 bar, abhängig vom CO₂-Gehalt, der Temperatur und der physikalischen Löslichkeit des CO₂ im Getränk.

Bevorzugt erfolgt in der zweiten Füllphase das Erhöhen des Druckes auf den zweiten Druck, nämlich das Vorspannen des Behälters, gleichzeitig mit dem Füllen der zweiten Produktkomponente in den Behälter. Ein derartiges gleichzeitiges Vorspannen und Füllen bringt zeitliche Vorteile mit sich, da die notwendige Zeit zum vollständigen Befüllen des Behälters, nämlich die Füllzeit pro Behälter deutlich reduziert werden kann.

Grundsätzlich kann die Erhöhung von dem ersten Druck auf den zweiten Druck gesteuert erfolgen und zwar in einem oder mehreren Schritten oder kontinuierlich, also stufenlos, wobei es unterschiedliche Möglichkeiten gibt, den Druck im Behälter zu steuern. Denkbar ist hierbei z.B. eine temperaturabhängige Steuerung, bei der der Druckanstieg in Abhängigkeit einer beispielsweise gemessenen Behältertemperatur oder Behälterinnenraumtemperatur oder Behälterwandungstemperatur, insbesondere des Bodens gesteuert wird. Ebenfalls denkbar ist eine füllstandabhängige Steuerung, bei der der Druckanstieg abhängig von einer dem Behälter zugeführten Menge an Flüssigkeit und damit in Abhängigkeit des Füllstandes im Behälter gesteuert wird. Alternativ oder additiv kann die Drucksteuerung auch zeitabhängig erfolgen.

Mehr im Detail kann das vorliegende Verfahren beispielsweise zumindest die nachfolgenden Verfahrensschritte beinhalten:
- Übergeben der Behälter an eine Füllmaschine,
- Positionieren des Behälters an einem Füllelement der Füllmaschine bei Umgebungsdruck,
- Erste Füllphase (Teilanfüllen) bei Umgebungsdruck, bei der die erste Produktkomponente dem Füllelement zugeführt und über das Füllelement in den Behälter abgegeben wird,
- Zweite Füllphase (vollständiges Füllen), bei der ein Vorspannen auf den zweiten Druck (Solldruck) erfolgt und die zweite Produktkomponente dem Füllelement zugeführt und über das Füllelement in den Behälter mittels Druckfüllen abgefüllt wird (Schnellfüllen)
- Optional: Langsames Füllen gegen Ende der zweiten Füllphase
- Beruhigungsphase
- Entlastung
- Lösen des Behälters vom Füllelement und
- Übergeben des Behälters von der Füllmaschine an den Weitertransport, in der Regel an einen Transportstern

Falls der Vorgang der Druckerhöhung das Füllen beeinträchtigt, können die Druckerhöhung und das Füllen auch alternierend vorgenommen werden, so dass während der Druckerhöhung die Befüllung kurz unterbrochen wird.

Diese Ausführungsform ist jedoch nicht so zu bevorzugen, weil vorzugsweise der Füllvorgang kontinuierlich vom Beginn bis zum Ende ohne Unterbrechung durchgeführt wird, was zu einer schnelleren und verwirbelungsfreieren Befüllung des Behälters führt. Falls der Vorgang der Druckerhöhung das Füllen beeinträchtigt, kann während des Füllens auch eine Druckentlastung vorgenommen werden.

Vorzugsweise wird der Solldruck im Behälter zum Einfüllen der kohlensäurehaltigen zweiten Produktkomponente zwischen 4-8 bar, insbesondere zwischen 5 und 7 bar eingeregelt. Dies ist möglich, indem eine entsprechende Druckgasquelle mit dem Behälterinnenraum verbunden ist. Als Druckgas wird insbesondere CO₂ oder ein Inertgas, wie z.B. Stickstoff, oder ein Gasgemisch verwendet, um eine Oxidierung des Getränks zu vermeiden.

Besonders bevorzugt werden als Behälter durch Streckblasen hergestellte PET-Behälter verwendet, wobei die vom Streckblasen kommenden, noch heißen Behälter unmittelbar nach dem Streckblasen an die Füllmaschine übergeben und in der ersten Füllphase bei dem ersten Druck mit der ersten Produktkomponente befüllt werden, wobei das in der ersten Füllphase in den noch heißen Behälter eingefüllte Volumen der ersten Produktkomponente zur Kühlung des Behälters, insbesondere eines Behälterbodens verwendet wird und höchstens 30 % einer Gesamt-Sollfüllmenge beträgt.

Die vom Streckblasen kommenden heißen Kunststoffbehälter, insbesondere PET-Behälter, werden unmittelbar nach dem Streckblasen mit Flüssigkeit befüllt. Da in der ersten Füllphase, nämlich zu Beginn des gesamten Füllvorgangs, der erste Druck im Behälter eingestellt wird, welcher vorzugsweise dem Umgebungsdruck entspricht und der in jedem Fall unter dem zweiten Druck liegt, wird auf den noch heißen Behälter kaum bzw. kein Druck durch Vorspannen ausgeübt. Der noch heiße Kunststoffbehälter wird daher nicht aufgrund des im Behälter anliegenden Drucks deformiert. Erst in der zweiten Füllphase, d.h. mit abnehmender bzw. bereits deutlich verringerter Behältertemperatur wird der Druck im Behälter auf den zweiten Druck erhöht, welcher vorzugsweise der Solldruck ist, der eingestellt werden muss für die Befüllung des Behälters mit einem bestimmten Getränk, das einen gewissen CO₂-Gehalt aufweist.

Durch die einlaufende erste Produktkomponente wird der sensible Bodenbereich des Behälters gekühlt, so dass er auch bei einem nachfolgend angelegten größeren Behälterinnendruck nicht mehr deformiert wird. Wenn somit die eingefüllte erste Produktkomponente den Bodenbereich und/oder zumindest Teile der Wandung des Behälters soweit abdeckt und/oder soweit abgekühlt hat, dass dieser bei einer Druckbeaufschlagung nicht mehr in unzulässiger Weise deformiert wird, kann der Behälter unter den zweiten Druck, nämlich den Solldruck gesetzt werden, welcher dazu führt, dass die CO₂-haltige zweite Flüssigkeitskomponente beim Einfüllen während der zweiten Füllphase nicht ausgast.

Durch den mehrphasigen Füllvorgang, aufweisend die erste Füllphase bei geringem ersten Druck und die zweite Füllphase bei dem höheren zweiten Druck, vorzugsweise Solldruck, wird sichergestellt, dass einerseits der Behälter nicht verformt, wenn er unmittelbar nach dem Streckblasen befüllt wird und dass andererseits eine sichere Befüllung auch stark CO₂-haltiger Flüssigkeitsprodukte, insbesondere Getränke, möglich ist.

Da mit dem Verfahren eine sofortige Befüllung des noch heißen Behälters möglich ist, spart man sich somit die Kühlstrecke zwischen der Streckblasmaschine und der Füllmaschine, was sowohl zu einer Platzeinsparung im Gebäude führt, als auch mit einer Einsparung an Energie und/oder Kühlkomponenten einhergeht. Die Herstellungs- und Befüllungskosten lassen sich somit deutlich reduzieren, ohne dass die Handhabung der gerade frisch streckgeblasenen Behälter beim unmittelbar darauffolgenden Befüllen durch eine Verformung der Behälter beeinträchtigt wird. Die unmittelbar an das Streckblasen anschließende Befüllung erfolgt somit zumindest weitgehend verformungsfrei. Weiterhin reduziert sich das Risiko einer Kontamination der zu diesem Zeitpunkt noch offenen Behälter während ihres Transportes von der Blasmaschine zur Füllmaschine erheblich, da der Transportweg durch den Entfall der Kühlstrecke erheblich verkürzt wird und eine etwaige äußere Beaufschlagung mit Wasser zumindest teilweise entfällt.

Gemäß einer bevorzugten Ausführungsvariante beträgt das Volumen der in der ersten Füllphase unter dem ersten Druck in den Behälter eingefüllten ersten Produktkomponente 0,7 % bis 25 % der Gesamt-Sollfüllmenge, bevorzugt 1 % bis 12,5 % der Gesamt-Sollfüllmenge und insbesondere bevorzugt 2 % bis 5 % der Gesamt-Sollfüllmenge. Ganz besonders bevorzugt kann das Volumen der ersten Produktkomponente rund 20 % oder rund 15 % oder rund 10 % oder rund 7,5 % oder rund 3% oder rund 1,5 % der Gesamt-Sollfüllmenge betragen. Bei Behältern mit einem Fassungsvolumen von etwa 1 Liter, insbesondere 1-Liter-Flaschen, bei denen eine Sollfüllmenge von 1 Liter vorgesehen ist, wird das Volumen der ersten Produktkomponente somit bevorzugt auf einen Bereich von 7 ml bis 250 ml, bevorzugt von 10 ml bis 125 ml und besonders bevorzugt auf einen Bereich von 20 ml bis 50 ml eingestellt. Ganz besonders bevorzugt beträgt bei solchen 1-Liter-Flaschen das Volumen der ersten Produktkomponente rund 200 ml oder rund 150 ml oder rund 100 ml oder rund 75 ml oder rund 30 ml oder rund 15 ml der Gesamt-Sollfüllmenge.

Bei Behältern mit einer Sollfüllmenge von 0,5 Liter oder 1 Liter oder 1,5 Liter, insbesondere bei 0,5-Liter-Getränkeflaschen, 1-Liter-Getränkeflaschen oder 1,5-Liter-Getränkeflaschen ist durch ein bevorzugtes Volumen von 15 ml oder 10 ml der Bodenbereich bedeckt. Insbesondere bei unmittelbar aus der Streckblasmaschine kommenden, heißen Behältern ist dieses Volumen von 15 ml oder 10 ml ausreichend, um den Bodenbereich in dem erforderlichen Maß derart zu kühlen, dass eine Verformung des Behälters bzw. des Bodenbereiches unterbleibt. Da der Abkühlvorgang bzw. die benötigte Abkühlzeit wesentlich von der Wärmeleitung des Behältermaterials sowie der Wärmeaufnahme bzw. Wärmekapazität der ersten Flüssigkeitskomponente abhängt, kann bei bekannter Dicke des Behältermaterials einerseits das optimale Volumen der ersten Flüssigkeitskomponente und/oder die Abkühldauer bestimmt werden, so dass die Prozesse der Druckerhöhung und der Befüllung für die zweiten Füllphase beispielsweise auch über eine Zeitsteuerung gesteuert werden können.

Der Wandungsbereich des Behälters mit der größten Dicke und damit auch mit dem größten Anteil an gespeicherter Wärme ist das Bodenzentrum, also der Bereich des Anspritzpunktes bzw. der Anspritznaht und die angrenzende Fläche. Hier ist in der Regel der unverstreckte oder wenig verstreckte Bereich des Flaschenbodens angeordnet. Dieser Bereich wird zentral von der Hochachse des Behälters durchstoßen. Als besonders bevorzugt hat sich dabei eine Überdeckungshöhe der inneren Behälteroberfläche über dem Anspritzpunkt mit der ersten Produktkomponente von mindestens 1,5 mm herausgestellt, idealerweise sollte die Überdeckungshöhe der inneren Behälteroberfläche größer oder gleich 5 mm betragen. Produktabhängig wird irgendwann eine Maximalmenge erreicht, bei dem der Gasverlust aus dem ersten Füllschritt nicht mehr im nachfolgenden Füllschritt mit einer zweiten Produktkomponente hin zum gewollten Produkt wirtschaftlich sinnvoll kompensiert werden kann. Bis zu dieser maximalen Füllmenge ist ein Vorfüllen mit einer ersten Produktkomponente sinnvoll, so dass der Überdeckungsgrad auch im Bereich von bis zu 15 mm liegen kann.

Besonders bevorzugt wird die erste Produktkomponente vor und/oder bei der Zuführung zum Füllelement gekühlt, wodurch besonders vorteilhaft auch die Kühlwirkung auf die noch heißen Behälter erhöht wird und die Behälter entsprechend mit einem geringeren Volumen der ersten Produktkomponente oder aber in kürzerer Zeit auf die gewünschte Temperatur unterhalb der Verformbarkeit gekühlt werden können.

Gemäß einer bevorzugten Ausführungsvariante wird die erste Produktkomponente mittels einer Bypass-Leitung dem Füllelement zugeführt. Beispielsweise kann die Zuführung der ersten Produktkomponente mittels einer Steuerung gesteuert erfolgen, wobei dazu beispielsweise Steuerventile Verwendung finden.

Das beschriebene Verfahren ist vorstehend im Zusammenhang mit der direkten Verwendung von noch heißen, durch Streckblasen hergestellten Kunststoffflaschen beschrieben. Es ist jedoch denkbar, das Verfahren auch grundsätzlich mit anderen Arten von Behältern, auch Glasflaschen, durchzuführen, insbesondere, wenn derartige Behälter heiß bzw. warm unmittelbar aus einer vorgeschalteten Behälterbehandlungseinrichtung kommend befüllt werden sollen.

Die Erfindung betrifft ebenfalls eine Vorrichtung gemäß Anspruch 15 zum Befüllen von Behältern mit einem CO₂-haltigen Flüssigkeitsprodukt mit einem vorgegebenen Produkt-CO₂-Gehalt, insbesondere zum Durchführen des zuvor beschriebenen Verfahrens. Gemäß der Erfindung umfasst die Vorrichtung eine Füllmaschine mit Füllelementen zum Befüllen der Behälter. Die Füllmaschine ist dazu eingerichtet, jeden der Behälter über eine erste Füllphase und eine daran anschließende zweite Füllphase zu befüllen, wobei die Füllmaschine ferner dazu eingerichtet ist, die Behälter für die erste Füllphase unter einen ersten Druck zu setzen und unter dem ersten Druck ein Volumen einer ersten Produktkomponente mit einem ersten CO₂-Gehalt abzufüllen und anschließend die Behälter für die zweite Füllphase unter einen zweiten Druck zu setzen und unter dem zweiten Druck ein Volumen einer zweiten Produktkomponente mit einem zweiten CO₂-Gehalt abzufüllen.

Die Füllmaschine weist dabei zumindest einen Vorlagebehälter für die erste Produktkomponente und zumindest einen Produktbehälter für die zweite Produktkomponente auf, wobei jedes Füllelement über eine mittels einer vorgesehenen Steuerung gesteuerte Zuführung zum Zuführen der ersten und zweiten Produktkomponente verbunden ist. Die Vorrichtung umfasst dazu eine mit den Füllelementen der Füllmaschine in korrespondierender Verbindung stehende Druckgasquelle sowie eine mit der Druckgasquelle verbundene Drucksteuerung für die entsprechende Einstellung und Steuerung des ersten und/oder zweiten Druckes. Die Füllelemente der Füllmaschine sind mit geeigneten Gaswegen und Rückgaswegen sowie gegebenenfalls mit einem oder mehreren entsprechenden Steuerventilen ausgebildet und umfassen ferner jeweils ein Füllventil und eine damit verbundene Ventilsteuerung.

Wie bereits oberhalb im Zusammenhang mit dem Verfahren erwähnt, besteht somit eine verbesserte Variante darin, dass der Druck in der ersten Füllphase mindestens zeitweise ansteigend ist, indem beispielsweise in der ersten Füllphase ein Erhöhen des Druckes auf einen zweiten Druck durch Abdichten des Behälters gegen den Umgebungsdruck und Zuführung von Flüssigkeit und/oder die Einleitung eines unter Druck stehenden Inertgases (vorspannen) erfolgt. Dabei kann das Einleiten der ersten Produktkomponente bei nicht abgedichtetem Behälter gestartet werden und dieser wird während der ersten Füllphase an der Mündung final abgedichtet.

Diese Druckerhöhung kann bei einer Ausführungsform bis zum zweiten Druck in der ersten Füllphase erfolgen, nämlich ein vollständiges Vorspannen des Behälters, wobei dies mindestens zeitweise gleichzeitig mit dem Füllen der ersten Produktkomponente in den jeweiligen Behälter erfolgt.

Die Vorrichtung umfasst zusätzlich eine Streckblasmaschine zur Herstellung von durch Streckblasen erzeugter Behälter, wobei die Füllmaschine unmittelbar neben der Streckblasmaschine angeordnet ist, und wobei die Füllmaschine konzipiert ist, die von der Streckblasmaschine kommenden Behälter zu übernehmen.

Bevorzugt weist die Vorrichtung ferner zumindest ein Mittel zur Kühlung der ersten Produktkomponente auf.

Ebenso bevorzugt weist die Vorrichtung ferner zumindest eine Bypass-Leitung für die Zuführung der ersten Produktkomponente an die Füllelemente auf.

Besonders bevorzugt ist die Füllmaschine als umlaufend angetriebene Füllmaschine mit einem Rotor ausgebildet, wobei an dem Rotor der Füllmaschine ein Ringkessel für die Bereitstellung und Zuführung der zweiten Produktkomponente vorgesehen ist und wobei ferner ein zusätzlicher Ringkanal für die Bereitstellung und Zuführung der ersten Produktkomponente vorgesehen ist.

Die Erfindung wird nachfolgend beispielsweise in der schematischen Zeichnung beschrieben. In dieser zeigen:
- Fig. 1: grob schematisch skizziert das Verfahren zum Befüllen von Behältern gemäß einer bevorzugten Ausführungsvariante der vorliegenden Erfindung;
- Fig. 2: schematisch dargestellt eine Vorrichtung zum Füllen von durch Streckblasen hergestellten PET-Flaschen gemäß einer bevorzugten Ausführungsform der Erfindung;
- Fig. 3: ausschnittsweise einen Übergangsbereich zwischen Streckblas- und Füllmaschine einer Ausführungsform der Vorrichtung wie in Figur 2;
- Fig. 4: schematisch dargestellt eine weitere Ausführungsform der Vorrichtung zum Befüllen von durch Streckblasen hergestellten PET-Flaschen.
- Fig. 5a, b: das Bodensegment eines Behälters und die Überdeckungshöhe mit einer ersten Flüssigkeit.

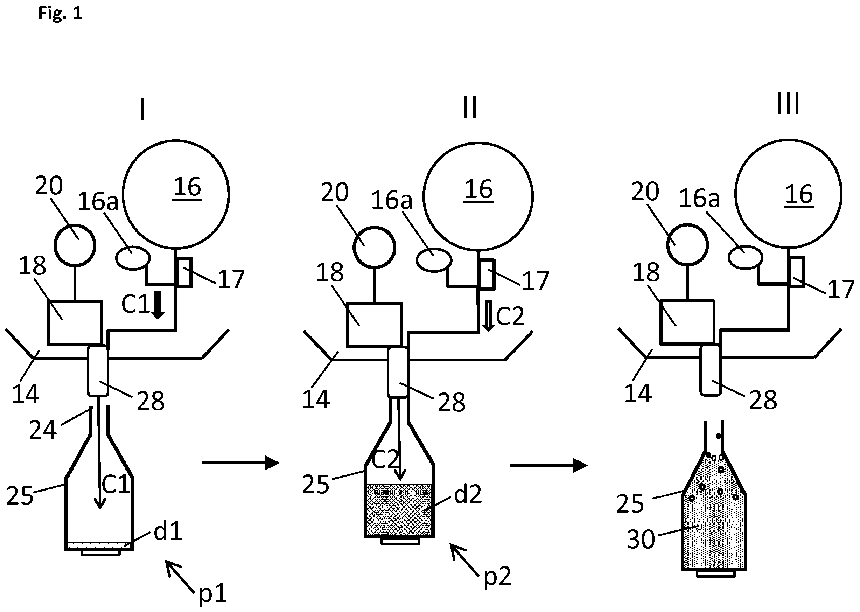

Figur 1 skizziert grob schematisch das Verfahren zum Befüllen von Behältern 25 mit einem CO₂-haltigen Flüssigkeitsprodukt 30 gemäß einer bevorzugten Ausführungsvariante der vorliegenden Erfindung. Das Flüssigkeitsprodukt 30 weist einen vorgegebenen Produkt-CO₂-Gehalt auf, der für das entsprechende Flüssigkeitsprodukt 30, insbesondere ein kohlensäurehaltiges bzw. karbonisiertes Getränk gemäß Produktspezifikation vorgegeben ist.

Bei dem Verfahren wird jeder Behälter 25 an eine Füllmaschine 14 (in Figur 1 nur ausschnittsweise und andeutungsweise gezeigt) übergeben, wobei die Füllmaschine 14 eine Vielzahl von Füllpositionen umfasst von denen jede mit zumindest je einem Füllelement 28 ausgestattet ist, wobei jeder Behälter 25 mittels eines der Füllelemente 28 befüllt wird. Jeder Behälter 25 wird dazu zunächst an einer entsprechenden Füllposition der Füllmaschine 14 derart positioniert, dass das Füllelement 28 mit dem Behälter 25 zusammenwirken kann, um in einer ersten Füllphase eine erste Produktkomponente C1 an den Behälter 25 abzugeben. Die erste Füllphase ist in Figur 1 mit der römischen Ziffer I versehen.

In der ersten Füllphase (siehe I der Figur 1), welche vorliegend auch als erster Füllschritt verstanden werden kann, wird der Behälter 25 unter einen ersten Druck p1 gesetzt, welcher im dargestellten Beispiel dem Umgebungsdruck entspricht und somit bei ca. 1 bar liegt. Die erste Füllphase kann daher in dem Beispiel der Figur 1 auch als drucklose Füllphase oder als druckloses Füllen verstanden werden, wobei während dieser ersten Füllphase keine Druck-Beaufschlagung des Behälters 25 bzw. keine Gaszufuhr in den Behälterinnenraum erfolgt. Während der ersten Füllphase wird die erste Produktkomponente C1 über eine entsprechende Zuführung dem Füllelement 28 zugeführt, wobei die erste Produktkomponente C1 dazu aus einem Vorlagebehälter 16a kommend durch eine die Zuführung bildende Zuführleitung geleitet und dem Füllelement 28 zugeführt wird. Die Zuführung der ersten Produktkomponente C1, welche in Figur 1 mit einem Pfeil angedeutet ist, wird dabei über eine Steuerung 17 gesteuert, wobei beispielsweise geeignete Steuerventile eingesetzt werden.

Die Abgabe der flüssigen Produktkomponenten C1, C2 aus dem Füllelement 28 in den Behälter 25 erfolgt schließlich über eine entsprechende Abgabeöffnung des Füllelementes 28, und zwar in bekannter Weise gesteuert über eine jeweilige steuerbare Ventileinheit, beispielsweise ein steuerbares Flüssigkeitsventil, welches einen Ventilkegel aufweist, der auf gesteuerte Weise relativ zu einem Ventilsitz bewegbar ist.

Das dem Füllelement 28 zugeführte Volumen der ersten Produktkomponente C1 wird während der ersten Füllphase über das Füllelement in den Behälter 25 abgegeben bzw. abgefüllt, wie in Abschnitt I der Figur 1 wiederum mit einem Pfeil gekennzeichnet ist. In dem dargestellten Beispiel wird der Behälter 25, insbesondere eine Behälteröffnung 24 für die erste Füllphase nicht in Dichtlage mit dem Füllelement 28, insbesondere mit einer Abgabeöffnung des Füllelementes 28 gebracht, so dass die durch das Volumen der einzufüllenden bzw. abgefüllten ersten Produktkomponente C1 verdrängte Luft aus dem Behälterinnenraum entweichen kann. Ein Druckanstieg im Behälterinnenraum aufgrund des eingefüllten Volumens der ersten Produktkomponente C1 erfolgt daher nicht. Die erste Füllphase erfolgt somit kontaktlos.

In der Figur 1 zwar nicht explizit dargestellt, kann jedoch alternativ auch bereits während der ersten Füllphase die Dichtlage zwischen der Behälteröffnung 24 und einem Anlageabschnitt des Füllelementes 28 hergestellt werden und der Druck im Behälter 25 langsam gesteigert werden. Dazu kann beispielsweise zunächst die erste Füllphase ohne Dichtlage des Behälters gestartet werden. Während der ersten Füllphase kann dann die Dichtlage hergestellt werden, wodurch der Innendruck im Behälter 25 geringfügig ansteigt, um schließlich für die darauffolgenden bzw. anschließende zweite Füllphase bzw. bei der zweiten Füllphase weiter erhöht zu werden. Damit wird Zeit gewonnen, so dass das gesamte Füllverfahren zeitoptimiert abläuft.

Die erste Produktkomponente C1 weist einen ersten CO₂-Gehalt, nämlich einen ersten Kohlensäure-Gehalt auf, der niedriger ist als der vorgegebene Produkt-CO₂-Gehalt des fertigen Flüssigkeitsproduktes 30. In der ersten Produktkomponente C1 vorhandene Kohlensäure bzw. vorhandenes CO₂ wird durch den Füllvorgang in der ersten Füllphase mindestens zum Teil oder aber vollständig aus der Flüssigkeit entweichen, da unter dem herrschenden Umgebungsdruck im Behälterinnenraum einem Aufschäumen und/oder einem Ausgasen der ersten Produktkomponente C1 nicht entgegengewirkt wird. Insbesondere in solchen Fällen in denen die Behälter 25 aus einer der Füllmaschine 14 vorgeschalteten Behälterbehandlungsmaschine kommen, in der die Behälter 25 eine Behandlung unter erhöhten bzw. hohen Temperaturen erfahren und noch warm oder noch heiß an die Füllmaschine 14 übergeben werden, wird die möglicherweise vorhandene Kohlensäure bzw. das vorhandene CO₂ teilweise aus der ersten Produktkomponente C1 ausgasen, da dieses Ausgasen temperatur- und zeitabhängig ist. In solchen Fällen dient das abgefüllte Volumen der ersten Produktkomponente C1 auch dazu, den Behälter 25 abzukühlen.

Im dargestellten Beispiel der Figur 1 wird als erste Produktkomponente C1 eine Produktkomponente verwendet, die eine erste relative Dichte d1, gemessen in Grad Brix, aufweist, welche geringer ist als ein vorgegebener Produktwert der relativen Dichte des fertig und vollständig abgefüllten Flüssigkeitsproduktes 30.

Nachdem die erste Produktkomponente C1 in den Behälter 25 abgefüllt ist, wird anschließend die zweite Füllphase (in Figur 1 mit der römischen Ziffer II gekennzeichnet) begonnen bzw. durchgeführt, bei der der Druck im Behälter 25 auf einen zweiten Druck p2 erhöht wird, welcher dem Solldruck zum Befüllen, nämlich dem Fülldruck entspricht und vorliegend zwischen 4,5 bar und 7 bar liegt. Diese Druckerhöhung auf den zweiten Druck p2 wird auch als Vorspannen des Behälters 25 verstanden. Um den Druck auf den zweiten Druck p2 zu erhöhen, wird in der zweiten Füllphase der Behälter 25, insbesondere die Behälteröffnung 24 in Dichtlage mit dem Füllelement 28 gebracht, wobei dazu insbesondere die Behälteröffnung 24 gasdicht mit der Abgabeöffnung des Füllelementes 28 verbunden wird. Die Druckerhöhung auf den zweiten Druck p2 erfolgt gesteuert über eine Drucksteuerung 18, die mit einer Druckgasquelle 20 verbunden ist. Über die Drucksteuerung 18 in Verbindung mit der Druckgasquelle 20 kann der Behälterinnendruck während des Befüllens in gewünschter Weise gesteuert werden. Für die Beaufschlagung des Behälters 25 mit Druckgas steht in dem Füllelement 28 eine entsprechender Gasweg zur Verfügung, der auf bekannte Weise mittels geeigneter Steuerventile steuerbar ist und in gesteuerter Weise geöffnet bzw. geschlossen werden kann. Auch ist in dem Füllelement 28 ein wie aus dem Stand der Technik bekannter steuerbarer Rückgasweg ausgebildet.

In der zweiten Füllphase, welche vorliegend auch als zweiter Füllschritt verstanden werden kann, wird eine zweite Produktkomponente C2 über die mit der Steuerung 17 verbundene Zuführung dem Füllelement 28 zugeführt, wobei die zweite Produktkomponente C2 dazu aus einem Produktbehälter bzw. Kessel 16 oder Füllgutkessel, beispielsweise einem Ringkessel kommend durch die Zuführung dem Füllelement 28 zugeführt wird. Die zweite Produktkomponente C2 wird mit einem zweiten CO₂-Gehalt, nämlich einem zweiten Kohlensäure-Gehalt ausgemischt und dem Füllelement 28 zugeführt, wobei der zweite CO₂-Gehalt höher ist als der vorgegebene Produkt-CO₂-Gehalt des fertigen Flüssigkeitsproduktes 30. Die Zuführung der zweiten Produktkomponente C2 ist im Abschnitt II der Figur 1 ebenfalls mit einem Pfeil angedeutet.

Das Vorspannen des Behälters 25 und Füllen mit der zweiten Produktkomponente C2 erfolgt vorzugsweise gleichzeitig, kann aber auch zeitlich voneinander versetzt erfolgen. Das Füllen in der zweiten Füllphase erfolgt zumindest teilweise als Schnellfüllen, wobei dem Schnellfüllen optional ein langsames Füllen gegen Ende der zweiten Füllphase folgt. Um den Füllvorgang zu vollenden bzw. zu beenden schließt sich zumindest eine Beruhigungsphase, eine Entlastung und schließlich das Lösen des Behälters 25 vom Füllelement 28 an.

Bei dem unter Fülldruck erfolgenden Abfüllen der zweiten Produktkomponente C2 in der zweiten Füllphase wird die vorhandene Kohlensäure bzw. das vorhandene CO₂ daran gehindert, aus der Flüssigkeit auszugasen und aus dem Behälterinnenraum zu entweichen. Die erste und die zweite Füllphase werden so aufeinander abgestimmt, dass nach beendeter Abfüllung (in Figur 1 mit der römischen Ziffer III bezeichnet) das vollständig abgefüllte, fertige Flüssigkeitsprodukt 30 den vorgegebenen Produkt-CO₂-Gehalt aufweist. Dazu werden insbesondere die Volumina der ersten und zweiten Produktkomponenten C1, C2 berücksichtigt und kontrolliert sowie gesteuert dem Füllelement 28 zugeführt.

Im dargestellten Beispiel der Figur 1 wird als zweite Produktkomponente C2 eine Produktkomponente verwendet, die eine zweite relative Dichte d2, gemessen in Grad Brix, aufweist, welche höher ist als der vorgegebene Produktwert der relativen Dichte des fertig und vollständig abgefüllten Flüssigkeitsproduktes 30. In Abhängigkeit der abgefüllten Volumina der ersten und zweiten Produktkomponenten C1, C2 werden die erste relative Dichte d1 und die zweite relative Dichte d2 derart eingestellt, dass das fertige und vollständig abgefüllte Flüssigkeitsprodukt 30 den vorgegebenen Produktwert der relativen Dichte aufweist und damit die ProduktSpezifikationen erfüllt.

Bei der ersten Produktkomponente C1 handelt es sich vorzugsweise um eine nicht-karbonisierte Flüssigkeit, insbesondere um Produktwasser, nämlich um Trinkwasser. Das in der ersten Füllphase abgefüllte Volumen der ersten Produktkomponente C1 kann daher sowohl in Bezug auf den CO₂-Gehalt als auch in Bezug auf die relative Dichte insbesondere als reines "Verdünnungsmittel" angesehen werden, d.h. die zweite Produktkomponente C2 wird mit einem entsprechend erhöhten CO₂-Gehalt und einem entsprechend erhöhten Brix-Wert ausgemischt, derart, dass durch die resultierende Verdünnung mit dem in der ersten Füllphase vorgelegten Volumenanteil Produktwasser die jeweiligen vorgegebenen Produktwerte des Flüssigkeitsproduktes 30 eingehalten werden.

Ganz besondere Vorteile ergeben sich durch das vorliegende Verfahren bei Anwendungen, bei denen durch Streckblasen hergestellte Kunststoffbehälter verwendet werden, die unmittelbar aus einer Streckblasmaschine 12 kommend, noch heiß an die Füllmaschine 14 übergeben werden. Bei der unter geringem ersten Druck p1, vorzugsweise unter Umgebungsdruck erfolgenden ersten Füllphase (druckloses Füllen) wird durch die kühlende Wirkung des abgefüllten Volumens der ersten Produktkomponente C1 die Behälterwand und insbesondere der Behälterboden der Behälter 25 auf eine Temperatur unterhalb der Verformungstemperatur abgekühlt. Erst in diesem abgekühlten Zustand beginnt das Vorspannen des Behälter 25 auf den höheren zweiten Druck p2 zum Druckfüllen in der zweiten Füllphase. Eine druckinduzierte ungewünschte Verformung der Behälter durch das Vorspannen wird somit verhindert.

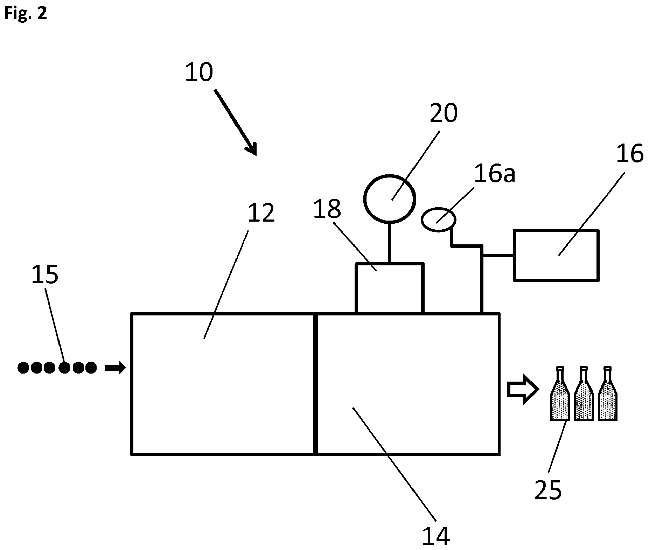

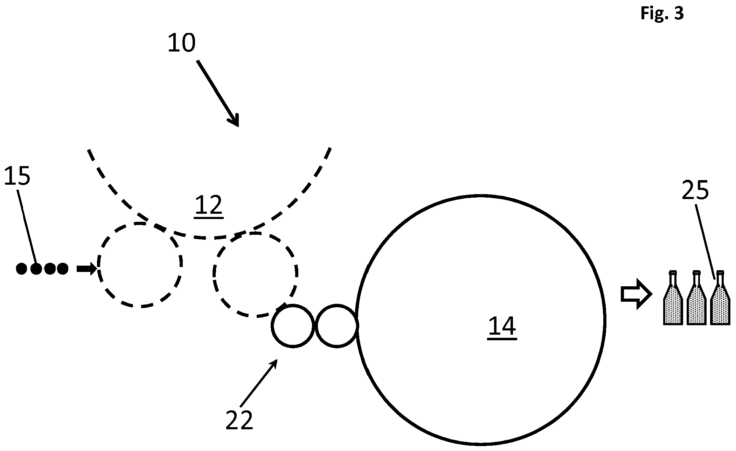

Eine beispielshafte Vorrichtung zum Befüllen von Behältern 25 umfassend eine Streckblasmaschine 12 zum Herstellen von PET-Flaschen ist in den Figuren 2 und 3 grob schematisch skizziert. Die Vorrichtung 10 umfasst eine Streckblasmaschine 12 und eine direkt danach angeordnete Füllmaschine 14. Die beiden Maschinen 12, 14 können direkt aneinandergrenzen. Es ist keine Abkühlstrecke dazwischen angeordnet. Figur 3 zeigt dabei lediglich ausschnittsweise einen Übergangsbereich zwischen der Streckblasmaschine 12 und einem Kreisel bzw. Stern einer umlaufenden, rotierend angetriebenen Füllmaschine 14.

Der Streckblasmaschine 12 werden beispielsweise Behälter-Preforms 15 zugeführt, welche der Streckblasmaschine 12 unter Hitze auf eine Behälterform, insbesondere Flaschenform geblasen werden. Alternativ kann der Prozess der Behälterherstellung auch mit der Zufuhr von PET-Pellets beginnen. Die noch heißen Flaschen werden mittels einfacher Transport- oder Überleitelemente 22, insbesondere Transport- oder Überleitsterne, an die direkt nachgeordnete Füllmaschine 14 übergeben.

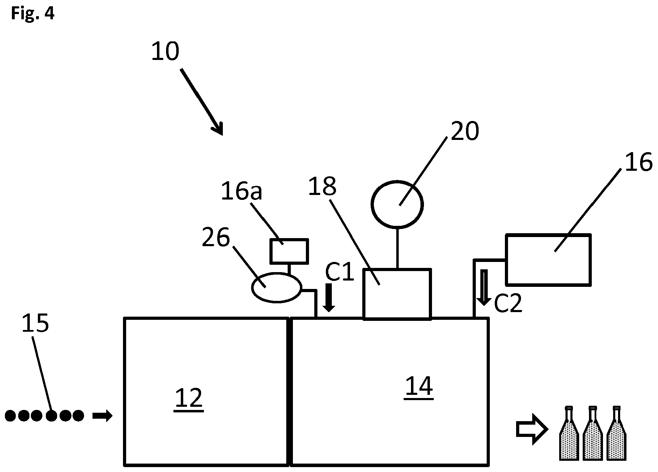

Figur 4 zeigt eine weitere bevorzugte beispielshafte Vorrichtung zum Befüllen von Behältern 25 umfassend eine Streckblasmaschine 12 zum Herstellen von PET-Flaschen. Bei der Vorrichtung gemäß Figur 4 erfolgen die Zuführung der ersten Produktkomponente C1 zum Füllelement und die Zuführung der zweiten Produktkomponente C2 zum Füllelement getrennt voneinander, wobei dazu für die Zuführung der ersten Produktkomponente C1 eine zusätzliche Bypass-Leitung vorgesehen ist. Beispielsweise kann die Zuführung der zweiten Produktkomponente C2 über einen Ringkessel 16 mit zugehörigen Zuführleitungen realisiert werden und die Zuführung der zweiten Produktkomponente C2 über einen zusätzlichen Ringkanal mit zugehörigen Zuführleitungen.

Gemäß dem dargestellten Beispiel der Figur 4 sind ferner Mittel zur Kühlung 26 der ersten Produktkomponente C1 vorgesehen, die die erste Produktkomponente C1 vor oder während der Zuführung zum Füllelement auf eine Temperatur unterhalb der Umgebungstemperatur kühlen, beispielsweise auf eine Temperatur von knapp über 0°C, bevorzugt von 1°C bis 15°C, vorzugsweise von 2°C bis 10°C, besonders bevorzugt von 4°C bis 8°C. Die Mittel zur Kühlung 26 können beispielsweise als Kühlmanschetten, Kühlmantel oder als Durchflusskühler oder dem Fachmann bekannte Kühlaggregate ausgebildet sein. Über die Kühlung der ersten Produktkomponente C1 kann vorteilhaft die Kühlwirkung auf heiße Behälter verstärkt werden.

In den beschriebenen Ausführungsbeispielen erfolgt die erste Füllphase jeweils als kontaktloses Füllen bei Umgebungsdruck. Alternativ kann jedoch auch bei entsprechend ausgebildeten Füllelementen 28 mit gesteuerten Füllventilen als erste Füllphase ein Füllen unter geringem Druck erfolgen. Hierbei kann z.B. eine Abgabeöffnung des Füllelementes auch während der ersten Füllphase mit der Behälteröffnung 24 über beispielsweise eine Manschette gasdicht verbunden werden, wobei das Füllelement über einen Rückgaskanal und eine Druckgasleitung verfügt. Durch die Steuerung und/oder Regelung des Rückgaskanals und der Druckgasleitung lässt sich der Druck im Behälterinnenraum während des Befüllens individuell steuern. Selbiges gilt selbstverständlich auch für die zweite Füllphase.

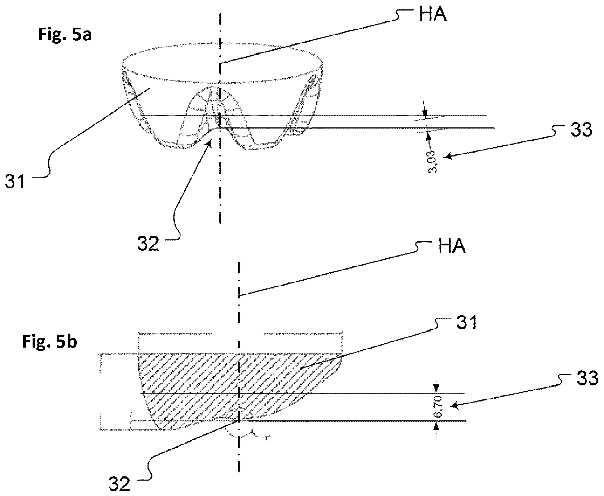

Die Figur 5a zeigt in einer perspektivischen Darstellung den Boden eines Behälters 35. Die Hochachse HA durchsticht vertikal den Ansatzpunkt 32, der um ca. 3 mm Überdeckungshöhe 33 von der ersten Produktkomponente C1 überdeckt wird. Der Ansatzpunkt 32 ist in der Schnittzeichnung Figur 5b zur Figur 5a gut zu erkennen. Die erste Produktkomponente C1 wird in einer geometrieabhängigen Menge eingefüllt, aber immer derart, dass der Ansatzpunkt 32, als Bodenabschnitt mit der größten Materialmenge und damit höchsten gespeicherten Wärmemenge, sicher mit einer hinreichenden Höhe an Produktkomponente C1 überdeckt ist. In dem vorliegenden Beispiel der Figur 5b besteht am Ansatzpunkt 32 eine Überdeckungshöhe von 6,70 mm am Ende dieser ersten Füllphase.

### Bezugszeichenliste:

- 10: Vorrichtung zum Befüllen von Behältern
- 12: Streckblasmaschine
- 14: Füllmaschine
- 15: Behälter-Preforms
- 16: Produktbehälter oder Kessel
- 16a: Vorlagebehälter
- 18: Drucksteuerung
- 17: Steuerung
- 20: Druckgasquelle
- 22: Transport- oder Überleitelemente
- 24: Behälteröffnung
- 25: Behälter
- 26: Mittel zum Kühlen
- 28: Füllelement
- 30: Flüssigkeitsprodukt
- 31: Behälterboden
- 32: Anspritzpunkt, -naht
- 33: Überdeckungshöhe

- C1: erste Produktkomponente
- C2: zweite Produktkomponente
- d1: erste relative Dichte gemessen in Grad Brix
- d2: zweite relative Dichte gemessen in Grad Brix
- HA: Hochachse des Behälters
- p1: erster Druck
- p2: zweiter Druck

## Patentansprüche

1. Verfahren zum Befüllen von Behältern (25) mit einem CO₂-haltigen Flüssigkeitsprodukt (30) mit einem vorgegebenen Produkt-CO₂-Gehalt, bei dem die Behälter (25) an eine Füllmaschine (14) mit Füllelementen (28) übergeben und mittels der vorgesehenen Füllelemente (28) befüllt werden, wobei als Behälter (25) durch Streckblasen hergestellte Kunststoff-Behälter, insbesondere PET-Behälter, verwendet werden, und wobei jeder Behälter (25) während des Beginns der Befüllung in einer ersten Füllphase unter einen ersten Druck (p1) gesetzt wird und nachfolgend der Druck im Behälter (25) in einer zweiten Füllphase auf wenigstens einen zweiten Druck (p2) erhöht wird, wobei die vom Streckblasen kommenden, noch heißen Behälter (25) unmittelbar nach dem Streckblasen ohne vorherige Kühlung durch Ansprühen und/oder Benetzen mit einem gasförmigen und/oder flüssigen Kühlmittel/-gemisch an die Füllmaschine (14) übergeben werden, **dadurch gekennzeichnet, dass**
in der ersten Füllphase ein Volumen einer ersten Produktkomponente (C1) mit einem ersten CO₂-Gehalt aus einem Vorlagebehälter (16a) kommend dem Füllelement (28) zugeführt und über das Füllelement (28) in den Behälter gefüllt wird und dass in der zweiten Füllphase ein Volumen einer zweiten Produktkomponente (C2) mit einem gleichen oder einem zweiten CO₂-Gehalt aus einem Produktbehälter (16) kommend dem Füllelement (28) zugeführt und über das Füllelement (28) in den Behälter gefüllt wird, wobei zumindest einer der beiden CO₂-Gehalte der Produktkomponenten (C1, C2) höher ist als der vorgegebene Produkt-CO₂-Gehalt des Flüssigkeitsproduktes und wobei die erste Füllphase und die zweite Füllphase derart aufeinander abgestimmt werden, dass das Flüssigkeitsprodukt (30) in dem vollständig befüllten Behälter (25) den vorgegebenen Produkt-CO₂-Gehalt aufweist.

2. Verfahren nach Anspruch 1, **dadurch gekennzeichnet, dass** in der ersten Füllphase ein Volumen einer ersten Produktkomponente (C1) mit einem ersten CO₂-Gehalt dem Füllelement (28) zugeführt und über das Füllelement (28) in den Behälter gefüllt wird und dass in der zweiten Füllphase ein Volumen einer zweiten Produktkomponente (C2) mit einem zweiten CO₂-Gehalt dem Füllelement (28) zugeführt und über das Füllelement (28) in den Behälter gefüllt wird, wobei zumindest der zweite CO₂-Gehalt der zweiten Produktkomponenten (C2) höher ist als der vorgegebene Produkt-CO₂-Gehalt des Flüssigkeitsproduktes und wobei die erste Füllphase und die zweite Füllphase derart aufeinander abgestimmt werden, dass das Flüssigkeitsprodukt (30) in dem vollständig befüllten Behälter (25) den vorgegebenen Produkt-CO₂-Gehalt aufweist.

3. Verfahren nach Anspruch 1 oder 2, **dadurch gekennzeichnet, dass** die erste Produktkomponente (C1) eine erste relative Dichte (d1), gemessen in Grad Brix, und die zweite Produktkomponente (C2) eine zweite relative Dichte (d2), gemessen in Grad Brix, aufweist, wobei die erste relative Dichte (d1) der ersten Produktkomponente (C1) geringer ist als ein vorgegebener Produktwert der relativen Dichte des Flüssigkeitsproduktes (30), wobei die zweite relative Dichte (d2) der zweiten Produktkomponente (C2) höher ist als der vorgegebene Produktwert der relativen Dichte des Flüssigkeitsproduktes (30) und wobei die erste und zweite relative Dichte (d1, d2) in Abhängigkeit des jeweiligen in der ersten und zweiten Füllphase abgefüllten Volumens der ersten und zweiten Produktkomponente (C1, C2) eingestellt wird, derart, dass das Flüssigkeitsprodukt (30) in dem vollständig befüllten Behälter (25) den vorgegebenen Produktwert der relativen Dichte aufweist.

4. Verfahren nach einem der vorhergehenden Ansprüche, **dadurch gekennzeichnet, dass** als erste Produktkomponente (C1) eine Produktkomponente (C1) verwendet wird, die einen ersten CO₂-Gehalt aufweist, der geringer ist als der vorgegebene Produkt-CO₂-Gehalt des Flüssigkeitsproduktes (30).

5. Verfahren nach einem der vorhergehenden Ansprüche, **dadurch gekennzeichnet, dass** als erste Produktkomponente (C1) eine nicht-karbonisierte Produktkomponente (C1), vorzugsweise ein Produktwasser verwendet wird.

6. Verfahren nach einem der vorhergehenden Ansprüche, **dadurch gekennzeichnet, dass** der erste Druck (p1) während der ersten Füllphase dem Umgebungsdruck entspricht.

7. Verfahren nach einem der vorhergehenden Ansprüche, **dadurch gekennzeichnet, dass** in der ersten Füllphase ein Erhöhen des Druckes (p1) auf einen erhöhten nächsten Druck größer als der Druck (p1) erfolgt, insbesondere auf den zweiten Druck (p2), durch Abdichten des Behälters gegen den Umgebungsdruck und Zuführung von Flüssigkeit.

8. Verfahren nach einem der vorhergehenden Ansprüche, **dadurch gekennzeichnet, dass** in der ersten Füllphase das Erhöhen des Druckes auf einen Wert größer als Druck (p1) erfolgt, insbesondere auf den zweiten Druck (p2), nämlich ein Vorspannen des Behälters (25), wobei dies mindestens zeitweise gleichzeitig mit dem Füllen der ersten Produktkomponente (C1) in den Behälter (25) erfolgt.

9. Verfahren nach einem der vorhergehenden Ansprüche, **dadurch gekennzeichnet, dass** in der zweiten Füllphase das Erhöhen des Druckes auf den zweiten Druck (p2), nämlich ein Vorspannen des Behälters (25), gleichzeitig mit dem Füllen der zweiten Produktkomponente (C2) in den Behälter (25) erfolgt.

10. Verfahren nach einem der vorhergehenden Ansprüche, **dadurch gekennzeichnet, dass** als Behälter (25) durch Streckblasen hergestellte Kunststoff-Behälter, insbesondere PET-Behälter, verwendet werden, wobei die vom Streckblasen kommenden, noch heißen Behälter (25) unmittelbar nach dem Streckblasen an die Füllmaschine (14) übergeben und in der ersten Füllphase bei dem ersten Druck (p1) mit der ersten Produktkomponente (C1) befüllt werden, wobei das in der ersten Füllphase in den noch heißen Behälter (25) eingefüllte Volumen der ersten Produktkomponente (C1) zur Kühlung des Behälters, insbesondere eines Behälterbodens verwendet wird und höchstens 30 % einer Gesamt-Sollfüllmenge beträgt.

11. Verfahren nach einem der vorhergehenden Ansprüche, **dadurch gekennzeichnet, dass** das Volumen der in der ersten Füllphase unter dem ersten Druck (p1) in den Behälter (25) eingefüllten ersten Produktkomponente (C1) 0,7 % bis 25 %, bevorzugt 1 % bis 20 %, insbesondere bevorzugt 2 % bis 10 % einer Gesamt-Sollfüllmenge beträgt.

12. Verfahren nach einem der vorhergehenden Ansprüche 1 bis 9, **dadurch gekennzeichnet, dass** der Behälter (25) im Bereich des Bodens (31) einen Anspritzpunkt (32) aufweist und in der ersten Füllphase eine erste Produktkomponente (C1) in einer Überdeckungshöhe (33) von mindestens 1,5 mmm über der inneren Behälteroberfläche über dem Anspritzpunkt (32) eingefüllt wird, idealerweise in einer Überdeckungshöhe (33) von größer oder gleich 5 mm eingefüllt wird.

13. Verfahren nach einem der vorhergehenden Ansprüche, **dadurch gekennzeichnet, dass** die erste Produktkomponente (C1) vor und/oder bei der Zuführung zum Füllelement (28) gekühlt wird.

14. Verfahren nach einem der vorhergehenden Ansprüche, **dadurch gekennzeichnet, dass** die erste Produktkomponente (C1) mittels einer Bypass-Leitung dem Füllelement (28) zugeführt wird.

15. Vorrichtung zum Befüllen von Behältern (25) mit einem CO₂-haltigen Flüssigkeitsprodukt (30) mit einem vorgegebenen Produkt-CO₂-Gehalt, insbesondere zum Durchführen des Verfahrens nach einem der vorhergehenden Ansprüche, welche Vorrichtung eine Füllmaschine (14) mit Füllelementen (28) zum Befüllen der Behälter (25) umfasst, **wobei**
die Füllmaschine (14) zumindest einen Vorlagebehälter (16a) für eine erste Produktkomponente (C1) und zumindest einen Produktbehälter (16) für eine zweite Produktkomponente (C2) aufweist, wobei jedes Füllelement (28) über eine mittels einer vorgesehenen Steuerung (17) gesteuerte Zuführung zum Zuführen der ersten und zweiten Produktkomponente (C1, C2) verbunden ist, wobei ferner jedes Füllelement (28) über einen mittels einer vorgesehenen Drucksteuerung (18) steuerbaren Gasweg mit einer Druckgasquelle (20) verbunden ist und über einen entsprechenden Anlageabschnitt für eine dichtende Anlage mit einer Behälteröffnung (24) der Behälter (25) verfügt, wobei die Füllmaschine (14) dazu eingerichtet ist, mittels eines jeweiligen in den Füllelementen (28) vorgesehenen Flüssigkeitsventils jeden der Behälter (25) über eine erste Füllphase und eine daran anschließende zweite Füllphase zu befüllen, wobei die Füllmaschine (14) ferner dazu eingerichtet ist, jeden Behälter (25) mittels eines der Füllelemente (28) über den mittels Drucksteuerung (18) steuerbaren Gasweg für die erste Füllphase unter einen ersten Druck (p1) zu setzen und mittels des zugehörigen Flüssigkeitsventils unter dem ersten Druck (p1) ein Volumen der ersten Produktkomponente (C1) mit einem ersten CO₂-Gehalt abzufüllen und anschließend den Behälter (25) mittels desselben Füllelementes (28) für die zweite Füllphase unter einen zweiten Druck (p2) zu setzen und unter dem zweiten Druck (p2) ein Volumen der zweiten Produktkomponente (C2) mit einem zweiten CO₂-Gehalt abzufüllen, wobei die Vorrichtung ferner eine Streckblasmaschine (12) zur Herstellung von durch Streckblasen erzeugter Behälter (25) umfasst, wobei die Streckblasmaschine (12) der Füllmaschine (14) vorgeschaltet ist und zur unmittelbaren Übergabe der Behälter (25) von der Streckblasmaschine (12) an die Füllmaschine (14) angeordnet ist.

16. Vorrichtung nach Anspruch 15, **dadurch gekennzeichnet, dass** die Füllmaschine (14) ohne Zwischenschaltung weiterer Behandlungseinheiten unmittelbar neben der Streckblasmaschine (12) zur Herstellung von durch Streckblasen erzeugter Behälter (25) angeordnet ist, und dass die Füllmaschine (14) konzipiert ist, die von der Streckblasmaschine kommenden Behälter (25) direkt zu übernehmen.

17. Vorrichtung nach Anspruch 15 oder 16, **dadurch gekennzeichnet, dass** die Vorrichtung ferner zumindest ein Mittel zur Kühlung der ersten Produktkomponente (C1) aufweist.

18. Vorrichtung nach einem der Ansprüche 15 bis 17, **dadurch gekennzeichnet, dass** die Vorrichtung ferner zumindest eine Bypass-Leitung für die Zuführung der ersten Produktkomponente (C1) an die Füllventile (28) aufweist.

19. Vorrichtung nach einem der Ansprüche 15 bis 18, **dadurch gekennzeichnet, dass** die Füllmaschine (14) als umlaufend angetriebene Füllmaschine (14) mit einem Rotor ausgebildet ist, wobei an dem Rotor der Füllmaschine (14) ein Ringkessel als Produktbehälter (16) für die Bereitstellung und Zuführung der zweiten Produktkomponente (C2) vorgesehen ist und wobei ferner ein zusätzlicher Ringkanal als Vorlagebehälter (16a) für die Bereitstellung und Zuführung der ersten Produktkomponente (C1) vorgesehen ist.

## Claims

1. Method for filling containers (25) with a liquid product (30) containing CO₂ and with a given product CO₂ content, wherein the containers (25) are transferred to a filling machine (14) with filling elements (28), and are filled by means of the filling elements (28) provided, wherein use is made as containers (25) of plastic containers produced by stretch-blow moulding, in particular PET containers, and wherein each container (25), at the start of the filling procedure, in a first filling phase, is pressurised to a first pressure (p1) and subsequently, in a second filling phase, the pressure in the container (25) is raised to at least a second pressure (p2), wherein the containers (25), coming from the stretch-blowing and still hot, are transferred to the filling machine (14) after the stretch-blowing, without prior cooling by spraying and/or wetting with a gaseous and/or liquid cooling agent/mixture,
**characterised in that**
in the first filling phase, a volume of a first production component (C1) with a first CO₂ content, coming from a storage container (16a), is conveyed to the filling element (28) and is filled into the container by way of the filling element (28), and that, in the second filling phase, a volume of a second product component (C2) with the same or a second CO₂ content and coming from a product container (16) is conveyed to the filling element (28), and is filled into the container by means of the filling element (28), wherein at least one of the two CO₂ contents of the product components (C1, C2) is higher than the given product CO₂ content of the liquid product, and wherein the first filling phase and the second filling phase are determined with respect to one another in such a way that the liquid product (30) in the completely filled container (25) has the given product CO₂ content.

2. Method according to claim 1, **characterised in that**, in the first filling phase, a volume of a first product component (C1) with a first CO₂ content is conveyed to the filling element (28) and is filled by means of the filling element (28) into the container, and that, in the second filling phase, a volume of a second product component (C2) with a second CO₂ content is conveyed to the filling element (28), and is filled by means of the filling element (28) into the container, wherein at least the second CO₂ content of the second product component (C2) is higher than the given product CO₂ content of the liquid product, and wherein the first filling phase and the second filling phase are determined with respect to one another in such a way that the liquid product (30) in the completely filled container (25) has the given product CO₂ content.

3. Method according to claim 1 or 2, **characterised in that** the first product component (C1) exhibits a first relative density (d1), measured in degrees Brix, and the second product component (C2) exhibits a second relative density (d2), measured in degrees Brix, wherein the first relative density (d1) of the first product component (C1) is less than the given product value of the relative density of the liquid product (30), wherein the second relative density (d2) of the second product component (C2) is higher than the given product value of the relative density of the liquid product (30), and wherein the first and second relative densities (d1, d2) are adjusted as a dependency of the respective volume, filled in the first and second filling phase, of the first and second product components (C1, C2), in such a way that the liquid product (30) in the completely filled container (25) exhibits the given product value at the relative density.

4. Method according to any one of the preceding claims, **characterised in that**, as the first product component (C1), a product component (C1) is used which exhibits a first CO₂ content which is less than the given product CO₂ content of the liquid product (30).

5. Method according to any one of the preceding claims, **characterised in that**, as the first product component (C1), a non-carbonised product component (C1) is used, preferably a product water.

6. Method according to any one of the preceding claims, **characterised in that** the first pressure (p1) during the first filling phase corresponds to the ambient pressure.

7. Method according to any one of the preceding claims, **characterised in that**, in the first filling phase, an increase in the pressure (p1) to an increased nearest pressure greater than the pressure (p1) takes place, in particular to the second pressure (p2), by the sealing of the container against the ambient pressure and the delivery of liquid.

8. Method according to any one of the preceding claims, **characterised in that**, in the first filling phase, the raising of the pressure to a value greater than the pressure (p1) takes place, in particular to the second pressure (p2), namely a pre-loading of the container (25), wherein this takes place, at least at certain times, simultaneously with the filling of the first product component (C1) into the container (25).

9. Method according to any one of the preceding claims, **characterised in that**, in the second filling phase, the raising of the pressure to the second pressure (p2), namely a pre-loading of the container (25), takes place simultaneously with the filling of the second product component (C2) into the container (25).

10. Method according to any one of the preceding claims, **characterised in that**, as containers (25), plastic containers produced by stretch-blowing are used, in particular PET containers, wherein the containers (25), coming from the stretch-blowing and still hot, are transferred immediately after the stretch-blowing to the filling machine (14), and in the first filling phase are filled at the first pressure (p1) with the first product component (C1), wherein the volume of the first product component (C1), filled in the first filling phase into the still hot container (25), is used for the cooling of the container, in particular of a container base, and amounts at the most to 30% of a total reference filling quantity.

11. Method according to any one of the preceding claims, **characterised in that** the volume of the first product component (C1), filled into the container (25) in the first filling phase under the first pressure (p1), amounts to 0.7 % to 25%, preferably 1% to 20%, and for particular preference 2% to 10%, of a total reference filling quantity.

12. Method according to any one of the preceding claims 1 to 9, **characterised in that** the container (25) comprises, in the region of the base (31), a feed point (32), and in the first filling phase a first product component (C1) is filled to an overtopping height (33) of at least 1.5 mm over the feed point (32), ideally at an overtopping height (33) greater than or equal to 5 mm.

13. Method according to any one of the preceding claims, **characterised in that** the first product component (C1) is cooled before and/or during the conveying to the filling element (28).

14. Method according to any one of the preceding claims, **characterised in that** the first product component (C1) is conveyed to the filling element (28) by way of a bypass line.

15. Device for the filling of containers (25) with a liquid product (30) containing CO₂, with a given product CO₂ content, in particular for carrying out the method according to any one of the preceding claims, which device comprises a filling machine (14) with filling elements (28) for the filling of the containers (25), **wherein**
the filling machine (14) comprises at least one storage container (16a) for a first product component (C1), and at least one product container (16) for a second product component (C2), wherein each filling element (28) is connected by means of a conveying process, controlled by means of a control device (17), provided for conveying the first and second product components (C1, C2), wherein, moreover, each filling element (28) is connected by means of a gas path, which can be controlled by means of a pressure control device (18), to a pressure gas source (20), and is provided with a corresponding system section for providing a sealing contact with a container opening (24) of the containers (25), wherein the filling machine (14) is configured such as to fill each of the containers (25), by means of a respective liquid valve provided in the filling elements (28), over a first filling phase and a subsequent second filling phase, wherein the filling machine (14) is further configured such as to put each container (25) under a first pressure (p1), by means of one of the filling elements (28), by way a gas path for the first filling phase which can be controlled by means of a pressure control (18), and, by means of the associated liquid valve, under the first pressure (p1), to fill a volume of the first product component (C1) with a first CO₂ content, and then, by means of the same filling element (28), to put the container (25), for the second filling phase, under a second pressure (p2), and, under the second pressure (p2), fill a volume of the second product component (C2) with a second CO₂ content, wherein the device further comprises a stretch-blow machine (12) for manufacturing containers (25) produced by stretch-blowing, wherein the stretch-blow machine (12) is located upstream of the filling machine (14), and is arranged for the direct transfer of the containers (25) from the stretch-blow machine (12) to the filling machine (14).

16. Device according to claim 15, **characterised in that** the filling machine (14) is arranged, without the intermediate engagement of further processing units, directly next to the stretch-blowing machine (12) for the producing of containers (25) produced by stretch-blowing, and that the filling machine (14) is configured such as to take over directly the containers (25) coming from the stretch-blowing machine.

17. Device according to claim 15 or 16, **characterised in that** the device further comprises at least one means for cooling the first product component (C1).

18. Device according to any one of claims 15 to 17, **characterised in that** the device further comprises at least one bypass line for the conveying of the first product component (C1) to the filling valves (28).

19. Device according to any one of claims 15 to 18, **characterised in that** the filling machine (14) is configured as a circulating driven filling machine (14) with a rotor, wherein a ring boiler is provided at the rotor of the filling machine (14) as a product holder (16) for the providing and delivery of the second product component (C2), and wherein further an additional ring boiler is provided as a storage container (16a) for the providing and delivery of the first product component (C1).

## Revendications

1. Procédé destiné à remplir des contenants (25) avec un produit liquide (30) contenant du CO₂ avec une teneur en CO₂ de produit prédéfinie, où les contenants (25) sont transmis à une machine de remplissage (14) avec des éléments de remplissage (28) et sont remplis au moyen des éléments de remplissage (28) prévus, dans lequel sont utilisés en tant que contenants (25) des contenants en matière plastique fabriqués par étirage-soufflage, en particulier des contenants en PET, et dans lequel chaque contenant (25) est mis sous une première pression (p1) pendant le débit du remplissage dans une première phase de remplissage puis la pression dans le contenant (25) est augmentée sur au moins une deuxième pression (p2) dans une deuxième phase de remplissage, dans lequel les contenants (25) encore très chauds arrivant de l'étirage-soufflage sont transférés à la machine de remplissage (14) directement après l'étirage-soufflage sans refroidissement préalable par pulvérisation et/ou par aspersion avec un agent/mélange de refroidissement gazeux et/ou liquide,
**caractérisé en ce que**
dans la première phase de remplissage, un volume d'un premier composant de produit (C1) avec une première teneur en CO₂ provenant d'un contenant de réserve (16a) est amené à l'élément de remplissage (28) et est rempli dans le contenant par l'intermédiaire de l'élément de remplissage (28), et que dans la deuxième phase de remplissage, un volume d'un deuxième composant de produit (C2) avec une teneur en CO₂ identique ou une deuxième teneur en CO₂ provenant d'un contenant de produit (16) est amené à l'élément de remplissage (28) et est rempli dans le contenant par l'intermédiaire de l'élément de remplissage (28), dans lequel au moins une des deux teneurs en CO₂ des composants de produit (C1, C2) est plus élevée que la teneur en CO₂ de produit prédéfinie du produit liquide et dans lequel la première phase de remplissage et la deuxième phase de remplissage sont adaptées de telle manière l'une à l'autre que le produit liquide (30) présente dans le contenant (25) totalement rempli la teneur en CO₂ de produit prédéfinie.

2. Produit selon la revendication 1, **caractérisé en ce que** dans la première phase de remplissage, un volume d'un premier composant de produit (C1) avec une première teneur en CO₂ est amené à l'élément de remplissage (28) et est rempli dans le contenant par l'intermédiaire de l'élément de remplissage (28), et que dans la deuxième phase de remplissage, un volume d'un deuxième composant de produit (C2) avec une deuxième teneur en CO₂ est amené à l'élément de remplissage (28) et est rempli dans le contenant par l'intermédiaire de l'élément de remplissage (28), dans lequel au moins la deuxième teneur en CO₂ des deuxièmes composants de produit (C2) est plus élevée que la teneur en CO₂ de produit prédéfinie du produit liquide et dans lequel la première phase de remplissage et la deuxième phase de remplissage sont adaptées l'une à l'autre de telle manière que le produit liquide (30) présente dans le contenant (25) totalement rempli la teneur en CO₂ de produit prédéfinie.

3. Procédé selon la revendication 1 ou 2, **caractérisé en ce que** le premier composant de produit (C1) présente une première densité relative (d1), mesurée en degrés Brix, et le deuxième composant de produit (C2) présente une deuxième densité relative (d2), mesurée en degrés Brix, dans lequel la première densité relative (d1) du premier composant de produit (C1) est inférieure à une valeur de produit prédéfinie de la densité relative du produit liquide (30), dans lequel la deuxième densité relative (d2) du deuxième composant de produit (C2) est plus élevée sur la valeur de produit prédéfinie de la densité relative du produit liquide (30) et dans lequel la première et la deuxième densité relative (d1, d2) sont réglées en fonction du volume respectif, transvasé dans la première et dans la deuxième phase de remplissage, du premier et du deuxième composant de produit (C1, C2) de telle manière que le produit liquide (30) présente dans le contenant (25) totalement rempli la valeur de produit prédéfinie de la densité relative.

4. Procédé selon l'une quelconque des revendications précédentes, **caractérisé en ce qu'**est utilisé en tant que premier composant de produit (C1) un composant de produit (C1), qui présente une première teneur en CO₂, qui est inférieure à la teneur en CO₂ de produit prédéfinie du produit liquide (30).

5. Procédé selon l'une quelconque des revendications précédentes, **caractérisé en ce qu'**est utilisé en tant que premier composant de produit (C1) un composant de produit (C1) non carbonisé, de préférence une eau produite.

6. Procédé selon l'une quelconque des revendications précédentes, **caractérisé en ce que** la première pression (p1) correspond pendant la première phase de remplissage à la pression environnante.

7. Procédé selon l'une quelconque des revendications précédentes, **caractérisé en ce que** dans la première phase de remplissage, une augmentation de la pression (p1) sur une pression élevée qui suit plus élevée que la pression (p1) est effectuée, en particulier sur la deuxième pression (p2), en étanchéifiant le contenant contre la pression environnante et en amenant du liquide.

8. Procédé selon l'une quelconque des revendications précédentes, **caractérisé en ce que** dans la première phase de remplissage, l'augmentation de la pression sur une valeur plus élevée sur la pression (p1) est effectuée, en particulier sur la deuxième pression (p2), à savoir une précontrainte du contenant (25), dans lequel cela est effectué au moins temporairement simultanément avec le remplissage du premier composant de produit (C1) dans le contenant (25).

9. Procédé selon l'une quelconque des revendications précédentes, **caractérisé en ce que** dans la deuxième phase de remplissage, l'augmentation de la pression sur la deuxième pression (p2), à savoir une précontrainte du contenant (25), est effectuée simultanément avec le remplissage du deuxième composant de produit (C2) dans le contenant (25).

10. Procédé selon l'une quelconque des revendications précédentes, **caractérisé en ce que** sont utilisés en tant que contenants (25) des contenants en matière plastique fabriqués par étirage-soufflage, en particulier des contenants en PET, dans lequel les contenants (25) encore très chauds provenant de l'étirage-soufflage sont transférés directement après l'étirage-soufflage à la machine de remplissage (14) et sont remplis dans la première phase de remplissage à la première pression (p1) avec le premier composant de produit (C1), dans lequel le volume, rempli dans le contenant (25) encore très chaud dans la première phase de remplissage, du premier composant de produit (C1) est utilisé pour refroidir le contenant, en particulier un fond de contenant et représente au maximum 30 % d'une quantité de remplissage de consigne totale.

11. Procédé selon l'une quelconque des revendications précédentes, **caractérisé en ce que** le volume du premier composant de produit (C1) rempli dans le contenant (25) à la première pression (p1) dans la première phase de remplissage représente 0,7 % à 25 %, de manière préférée 1 % à 20 %, en particulier de manière préférée 2 % à 10 % d'une quantité de remplissage de consigne totale.

12. Procédé selon l'une quelconque des revendications précédentes 1 à 9, **caractérisé en ce que** le contenant (25) présente dans la zone du fond (31) un point d'injection (32), et dans la première phase de remplissage, un premier composant de produit (C1) est transvasé par-dessus le point d'injection (32) par-dessus la surface de contenant intérieure à une hauteur de recouvrement (33) d'au moins 1,5 mm, idéalement à une hauteur de recouvrement (33) supérieure ou égale à 5 mm.

13. Procédé selon l'une quelconque des revendications précédentes, **caractérisé en ce que** le premier composant de produit (C1) est refroidi avant et/ou lors de l'amenée à l'élément de remplissage (28).

14. Procédé selon l'une quelconque des revendications précédentes, **caractérisé en ce que** le premier composant de produit (C1) est amené à l'élément de remplissage (28) au moyen d'un conduit de dérivation.

15. Dispositif destiné à remplir des contenants (25) avec un produit liquide (30) contenant du CO₂ avec une teneur en CO₂ de produit prédéfinie, en particulier destiné à mettre en oeuvre le procédé selon l'une quelconque des revendications précédentes, lequel dispositif présente une machine de remplissage (14) avec des éléments de remplissage (28) destinés à remplir les contenants (25), dans lequel
la machine de remplissage (14) présente au moins un contenant de réserve (16a) pour un premier composant de produit (C1) et au moins un contenant de produit (16) pour un deuxième composant de produit (C2), dans lequel chaque élément de remplissage (28) est relié par l'intermédiaire d'une amenée commandée au moyen d'une commande (17) prévue, destinée à amener le premier et le deuxième composant de produit (C1, C2), dans lequel en outre chaque élément de remplissage (28) est relié à une source de gaz comprimé (20) par l'intermédiaire d'une voie de gaz pouvant être commandée au moyen d'une commande de pression (18) prévue et dispose d'une section d'appui correspondante en vue d'un appui assurant l'étanchéité avec une ouverture de contenant (24) des contenants (25), dans lequel la machine de remplissage (14) est mise au point pour remplir chacun des contenants (25) sur une première phase de remplissage et une deuxième phase de remplissage située immédiatement après au moyen d'une soupape de liquide respective prévue dans les éléments de remplissage (28), dans lequel la machine de remplissage (14) est mise au point en outre pour mettre sous une première pression (p1) pour la première phase de remplissage chaque contenant (25) au moyen d'un des éléments de remplissage (28) par l'intermédiaire de la voie de gaz pouvant être commandée au moyen de la commande de pression (18) et pour transvaser un volume du premier composant de produit (C1) avec une première teneur en CO₂ à la première pression (p1) au moyen de la soupape de liquide associée puis pour placer sous une deuxième pression (p2) pour la deuxième phase de remplissage le contenant (25) au moyen du même élément de remplissage (28) et pour transvaser sous la deuxième pression (p2) un volume du deuxième composant de produit (C2) avec une deuxième teneur en CO₂, dans lequel le dispositif comprend en outre une machine d'étirage-soufflage (12) destinée à fabriquer des contenants (25) produits par étirage-soufflage, dans lequel la machine d'étirage-soufflage (12) est installée en amont de la machine de remplissage (14) et est disposée pour transférer directement les contenants (25) de la machine d'étirage-soufflage (12) à la machine de remplissage (14).

16. Dispositif selon la revendication 15, **caractérisé en ce que** la machine de remplissage (14) est disposée sans intercaler d'autres unités de traitement directement à côté de la machine d'étirage-soufflage (12) pour fabriquer des contenants (25) produits par étirage-soufflage, et que la machine de remplissage (14) est conçue pour recevoir directement les contenants (25) arrivant de la machine d'étirage-soufflage.

17. Dispositif selon la revendication 15 ou 16, **caractérisé en ce que** le dispositif présente en outre au moins un moyen destiné à refroidir le premier composant de produit (C1).

18. Dispositif selon l'une quelconque des revendications 15 à 17, **caractérisé en ce que** le dispositif présente en outre au moins une conduite de dérivation pour l'amenée du premier composant de produit (C1) aux soupapes de remplissage (28).

19. Dispositif selon l'une quelconque des revendications 15 à 18, **caractérisé en ce que** la machine de remplissage (14) est réalisée en tant qu'une machine de remplissage (14) entraînée en rotation avec un rotor, dans lequel une cuve circulaire est prévue, sur le rotor de la machine de remplissage (14), en tant que contenant de produit (16) pour la fourniture et l'amenée du deuxième composant de produit (C2) et dans lequel en outre un canal circulaire supplémentaire est prévu en tant que contenant de réserve (16a) pour la fourniture et l'amenée du premier composant de produit (C1).
